# EUROPEAN PATENT SPECIFICATION

(11) **EP 4 223 714 B1**
(45) Date of publication and mention of the grant of the patent: **25.09.2024**
(21) Application number: 22172222.6
(22) Date of filing: 09.05.2022
(51) Int. Cl.: C03C 17/10, G02B 5/08, C23C 18/28, C23C 18/18

(54) **A SENSITIZING SOLUTION AND METHOD OF ITS PREPARATION**
SENSIBILISIERUNGSLÖSUNG UND VERFAHREN ZU IHRER HERSTELLUNG
SOLUTION DE SENSIBILISATION ET SON PROCÉDÉ DE PRÉPARATION

(30) Priority: 02.02.2022 CZ 20220051
(43) Date of publication of application: 09.08.2023
(73) Proprietor: Ego 93, s.r.o., 537 01 Chrudim (CZ)
(72) Inventor: Molnár, Martin, 53352 Ráby (CZ)
(74) Representative: Skoda, Milan

(56) References cited:
- CA-A- 966 937
- GB-A- 1 174 851
- US-A- 3 772 056
- US-A- 3 925 578
- US-A- 3 993 802

## Description

### Field of the Invention

The present invention relates to a sensitizing solution, in particular to a sensitizing solution for sensitizing the surface of glass and plastics, especially for sensitizing glass panels, prior to applying further coatings, and the methods of its preparation.

### Background of the Invention

Nowadays, a number of applications of various sensitizing solutions are known for increasing the sensitivity of various electrically non-conductive surfaces to accept different coatings layers such as Pd, Ru, Cu, Ag.

It is known from a patent document CS 112952 that for sensitizing surfaces is generally used a known sensitizing agent, namely an aqueous solution of tin(II) chloride at various concentrations or an aqueous solution of tin(II) chloride with a certain proportion of hydrochloric acid, which inhibits hydrolysis of the dissolved tin salt. Sensitization is used to form a continuous hydrophilic film of tin on the treated surface, which is determinative for a good progress of silvering process and for quality of deposited silver. Just before application on a glass surface, the sensitizing solution concentrate is diluted with distilled water, which raises the pH of the sensitizing solution and causes a disproportionation reaction, leading to the deposition of tin on the glass surface. This solution is then thoroughly rinsed off the surface with distilled water. The glass surface is thus ready for the application of additional coatings or for direct silvering. According to a method of preparing tin(II) chloride-based solutions for sensitizing electrically non-conductive objects intended to be chemically silvered, as disclosed in this patent document, solid SnCl₂ is oxidized by 1.0 to 10.0% H₂O₂ solution or 1.0 to 10.0% FeCl₃ solution or 0.5 to 5.0% KMnO₄ solution or 0.6 to 6.0% K₂Cr₂O₇ solution, obtaining at least 5% and the most 30% of SnCl₄.

A method for increasing the sensitizing ability of solutions for the treatment of electrically non-conductive surfaces of objects of organic origin prior to silvering is described in a patent document CS 120550. A solution is prepared from tin(II) chloride with an addition of oxidizing agents, for example hydrogen peroxide, while ferric sulphate, ferric chloride or ferric hydroxide is also added to the solution in an amount corresponding to 0.2 to 0.7% of the used solid tin(II) chloride.

Currently, glass surface sensitization is usually performed using an acidic aqueous solution of tin(II) chloride (SnCl₂) in water. The tin deposited on the glass surface supports silvering process. Reducing silvering then proceeds faster, more evenly and the formed silver layer adheres better to the glass.

The tin(II) chloride solution is supplied as a concentrate containing 1,145 g of SnCl₂ . 2 H₂O and 167 g of HCl in 1 litre of solution. This 1 litre of solution contains 600 g of tin. Hydrochloric acid is added for stabilization because the solution, especially diluted, tends to oxidise and thereby degrade. At the same time, the addition of hydrochloric acid ensures the solubility of tin(II) chloride at lower temperatures. Prior to application onto the glass, the concentrate is diluted with distilled water and dosed in amount of 50 to 70 mg Sn/m² of glass.

Currently, 1,570 m² of glass pass through the mirror production line per hour, during this time 600 g of Sn x (2.5 x 0.07) = 105 g Sn is applied onto the glass per hour. Per 1 m² this makes 105,000 mg : 1,570 m² = 66 mg Sn per m². The deposition on glass is around 3.5 to 4.1 mg Sn/m². The effectiveness is therefore low, around 6% of tin is deposited on the glass and 94% is discharged into waste water.

The principle of deposition can be expressed by the following equation: 2SnCl₂ → Sn + SnCl₄. It is a disproportionation, where one molecule is reduced, the other one is oxidised. If everything proceeded perfectly, a maximum of 50% of tin would be deposited on a glass surface. However, it is necessary to use an even larger excess in order to cover the glass with the required layer of tin.

The sensitizing solution is known from patent document GB 1174851 A, where a mixture of stannous chloride solutions with chloride of rare metals is stabilized by adding glycol. Its advantage is that it can be easily transported and stored for a long time. Its big disadvantage is the limited excretion of tin on the sensitized surface, which means that a large amount of tin is not used and goes to waste water.

From the above-mentioned state of art, it is clear that it has a number of disadvantages, the main disadvantage is very low yield of tin forming the sensitizing layer. The redundant sensitizing solution is discharged to waste water together with a large amount of unused tin. This represents a major environmental burden, with significant disposal and recycling costs.

The object of the invention is to prepare a sensitizing solution enabling a substantially higher yield of tin from the sensitizing solution, while maintaining or improving the quality of the sensitization process.

### Summary of the Invention

The above-mentioned disadvantages are significantly eliminated and the object of the invention is realized by a sensitizing solution, particularly a sensitizing solution for sensitizing of surfaces, containing a solution of tin(II) chloride SnCl₂ and distilled water, particularly for sensitizing non-conductive surfaces such as glass panel surfaces prior to applying silvering solution, or for sensitizing a silvered surface prior to applying silane solution, or for sensitizing plastics, according to the invention, the subject matter of the invention is that it contains 0.01 to 1 wt.‰ of tin(II) chloride SnCl₂, 0.01 to 1 wt. ‰ of glycerine, and the rest consists of distilled water. The advantage of adding glycerine is that during sensitization occurs a reduction reaction, while all tin is reduced and an organic agent is oxidized.

The above-mentioned disadvantages are further significantly eliminated and the object of the invention realized by the preparation method of the sensitizing solution, especially the method of preparation of the above-mentioned sensitizing solution according to the invention, the subject matter of the invention is that glycerine is firstly pre-heated to 35 °C. Subsequently for 1 litre of the resulting sensitizing solution, 45 to 450 ml of acidic solution of tin(II) chloride with a temperature of 20 °C and a concentration of 1,145 g of tin(II) chloride dihydrate per 1 litre is slowly added under constant stirring to 50 to 500 g of glycerine. Furthermore, distilled water is added and all components are stirred again, forming 1 litre of concentrated sensitizing agent. Subsequently, during the sensitization of the surface, all the tin is reduced and the organic agent is oxidized according to the following equation:

2 SnCl₂ + X → 2 Sn + XCl₂

where X is an organic reducing agent, which is glycerine. The advantage is that theoretically almost 100% of Sn can be deposited on the surface.

In a preferred embodiment, prior to application onto the surface, the concentrated sensitizing agent is diluted with distilled water in a ratio of 1:500 to 1 :5,000. The advantage is that such previously prepared concentrate can be diluted at the place of application, which saves both transport and storage costs.

The main advantage of the invention is a significant cost saving thanks to considerably higher yield of tin from the sensitizing agent. Using the sensitizing solution according to this invention, as the mirror production line also processes 1,570 m² of glass per hour, and onto 1 m² is applied only 10 mg Sn/ m², while deposited is only 4 mg Sn/m² on the glass. The Sn deposition rate on the glass is thus around 40%. The used sensitizing solution per 1 m² of glass, containing the remaining 6 mg of Sn, is discharged into waste water. When using conventional sensitizing agent, 66 mg - 4 mg ₌ 62 mg of Sn is discharged into waste water per 1 m² of glass. Therefore, when using the sensitizing solution according to this invention, 56 mg of Sn is saved per 1 m² of mirror produced. The significant advantage is not only the economic effect, but also the environmental effect. While using the sensitizing solution according to this invention, 90% less of tin is discharged into waste water compared to the use of conventional sensitization.

### Preferred embodiments of the Invention

### Example 1

A sensitizing solution for sensitizing glass panel surface, prior to applying a silvering solution, contains 1 wt.‰ of tin(II) chloride SnCl₂, 1 wt.‰ of glycerine, and the rest consists of distilled water.

According to the preparation method of the above-mentioned sensitizing solution containing a reducing agent, which is glycerine, the first step was to pre-heat glycerine to 35 °C. Subsequently for 1 litre of the resulting sensitizing solution, to 500 g of glycerine under constant stirring was slowly added 450 ml of acidic solution of tin(II) chloride with a temperature of 20 °C and a concentration of 1,145 g of tin(II) chloride dihydrate per 1 litre. Furthermore, distilled water was added and all components were stirred again, forming 1 litre of concentrated sensitizing agent, which prior to application onto the surface to be sensitized, was diluted with distilled water in a ratio of 1: 500.

The sensitizing solution thus prepared is then applied onto the glass panel surface; after a while, the remaining solution has to be thoroughly rinsed by distilled water, so the treated surface is ready for applying the silvering solution.

### Example 2

A sensitizing solution for sensitizing silvered glass panel surface, prior to applying a silane solution, contains 0.01 wt.‰ of tin(II) chloride SnCl₂, 0.01 wt.‰ of glycerine, and the rest consists of distilled water.

According to the preparation method of the above-mentioned sensitizing solution, containing a reducing agent, which is glycerine, the first step was to pre-heat glycerine to 35 °C. Subsequently for 1 litre of the resulting sensitizing solution, 50 g of glycerine under constant stirring was slowly added 45 ml of acidic solution of tin(II) chloride with a temperature of 20 °C and a concentration of 1,145 g of tin(II) chloride dihydrate per 1 litre. Furthermore, distilled water was added and all components were stirred again, forming 1 litre of concentrated sensitizing agent, which prior to application onto the surface to be sensitized, was diluted with distilled water in a ratio of 1: 5,000.

The sensitizing solution thus prepared is applied onto the silvered glass panel surface, previously rinsed with distilled water. Next the surface is rinsed with distilled water again and the silane solution is applied.

### Example 3

A sensitizing solution for sensitizing plastics, prior to applying a silver coating, contains 0.02 wt.‰ of tin(II) chloride SnCl₂, 0.02 wt.‰ of glycerine, and the rest consists of distilled water.

According to the preparation method of the above-mentioned sensitizing solution, containing a reducing agent, which is glycerine, the first step was to pre-heat glycerine to 35 °C. Subsequently for 1 litre of the resulting sensitizing solution, 100 g of glycerine under constant stirring was slowly added 90 ml of acidic solution of tin(II) chloride with a temperature of 20 °C and a concentration of 1,145 g of tin(II) chloride dihydrate per 1 litre. Furthermore, distilled water was added and all components were stirred again, forming 1 litre of concentrated sensitizing agent, which prior to application onto the surface to be sensitized, was diluted with distilled water in a ratio of 1: 5,000.

The sensitizing solution thus prepared is applied onto the plastic surface prior to rinsing by distilled water and applying the silvering solution.

### Industrial applicability

The sensitizing solution according to the present invention can be used for sensitizing various types of surfaces, especially glass panels in mirror production, to sensitize silver coating before applying silane, and for treating plastics prior to silvering their surfaces.

## Claims

1. A sensitizing solution, especially a sensitizing solution for sensitizing surfaces, containing a solution of tin(II) chloride SnCl₂ and distilled water, especially for sensitizing non-conductive surfaces, **characterized in that** it contains 0.01 to 1 wt.‰ of tin(II) chloride SnCl₂, 0.01 to 1 wt.‰ of glycerine and distilled water.

2. A method of preparation of the sensitizing solution, especially the preparation method of the sensitizing solution according to claim 1, **characterized in that** firstly glycerine is pre-heated to 35 °C, and secondly for 1 litre of the resulting sensitizing solution, 45 to 450 ml of tin(II) chloride SnCl₂ solution with a temperature of 20 °C and a concentration of 1,145 g of tin(II) chloride dihydrate per 1 litre is slowly added under constant stirring to 50 to 500 g of glycerine, and finally, distilled water is added and all components are stirred again, forming concentrated sensitizing solution.

3. The method of preparation of the sensitizing solution according to claim 2, **characterized in that** the sensitizing solution concentrate is diluted with distilled water in a ratio of 1:500 to 1:5,000 before applying onto a surface to be sensitized.

## Patentansprüche

1. Sensibilisierungslösung, insbesondere Sensibilisierungslösung zur Oberflächensensibilisierung, die Zinnchlorid-Lösung SnCl₂ und destilliertes Wasser enthält, insbesondere zur Sensibilisierung nichtleitender Oberflächen, **gekennzeichnet dadurch, dass** diese 0,01 bis 1 %o-Gew. Zinnchlorid SnCl₂, 0,01 bis 1‰-Gew. Glycerin und destilliertes Wasser enthält.

2. Verfahren zur Herstellung der Sensibilisierungslösung nach dem Anspruch 1, **gekennzeichnet dadurch, dass** das Glycerin zuerst auf eine Temperatur von 35°C erwärmt wird, dann wird pro 1 Liter der endgültigen Sensibilisierungslösung, zu 50 bis 500 g Glycerin unter ständiger Rührung 45 bis 450 ml 20°C-warme Lösung von Zinnchlorid SnCl₂ mit einer Konzentration von 1145 g Zinnchlorid-Dihydrat pro 1 Liter langsam hinzugefügt, und dann wird destilliertes Wasser nachgefüllt und alles wird erneut durchgerührt, wobei ein Konzentrat der Sensibilisierungslösung hergestellt wird.

3. Verfahren zur Herstellung der Sensibilisierungslösung nach dem Anspruch 2, **gekennzeichnet dadurch, dass** das Konzentrat der Sensibilisierungslösung vor dem Auftragen auf die zu sensibilisierende Oberfläche mit destilliertem Wasser in einem Verhältnis von 1 : 500 bis 1 : 5000 verdünnt wird.

## Revendications

1. Solution de sensibilisation, en particulier solution de sensibilisation pour la sensibilisation de surfaces, contenant une solution de chlorure stanneux SnCl₂ et d'eau distillée, en particulier pour la sensibilisation de surfaces non conductrices, **caractérisée en ce q** u'elle contient 0,01 à 1 %o en poids de chlorure stanneux SnCl₂, 0,01 à 1 % en poids de glycérine, et de l'eau distillée.

2. Méthode de préparation de la solution de sensibilisation selon la revendication 1, **caractérisée en ce que** la glycérine est d'abord chauffée à une température de 35°C, ensuite, pour 1 litre de la solution de sensibilisation résultante, à 50 à 500 g de glycérine, il est ajouté lentement et sous agitation 45 à 450 ml d'une solution de chlorure stanneux SnCl₂ chaude à 20°C à une concentration de 1 145 g de chlorure stanneux dihydraté par litre, puis il est ajouté de l'eau distillée et le tout est à nouveau agité pour former un concentré de la solution de sensibilisation.

3. Méthode de préparation de la solution de sensibilisation selon la revendication 2, **caractérisée en ce que** le concentré de la solution de sensibilisation est dilué avec de l'eau distillée dans un rapport de 1 : 500 à 1 : 5000 avant d'être appliqué sur la surface sensibilisée.
